# EUROPÄISCHE PATENTSCHRIFT

(11) **EP 1 321 394 B1**
(45) Veröffentlichungstag und Bekanntmachung des Hinweises auf die Patenterteilung: **08.02.2006**
(21) Anmeldenummer: 02027016.1
(22) Anmeldetag: 03.12.2002
(51) Int. Cl.: B65G 51/03

(54) **Weichenvorrichtung für Luftförderer**
Switch for air conveyor
Dispositif d'aiguillage pour convoyeur à air

(30) Priorität: 20.12.2001 DE 10162827
(43) Veröffentlichungstag der Anmeldung: 25.06.2003
(73) Patentinhaber: KRONES AG, 93068 Neutraubling (DE)
(72) Erfinder: Dragon, Christoph, 93073 Neutraubling (DE); Seidl, Andreas, 93093 Donaustauf (DE)

(56) Entgegenhaltungen:
- EP-A- 0 649 804
- FR-A- 2 824 544
- US-A- 5 567 091
- US-A- 5 810 516

## Beschreibung

Die Erfindung betrifft eine Weichenvorrichtung für Luftförderer, mit denen insbesondere Kunststoffflaschen an ihrem Kragen hängend transportiert werden können, wobei der Luftförderer feststehende Förderbahnabschnitte aufweist.

Derartige Luftförderer werden für den Transport von PET-Flaschen eingesetzt. Auf dem Weg von oder zu verschiedenen Be- oder Verarbeitungsstationen der Flaschen ist es ggf. nötig, den Weg, den eine Flasche nimmt, zu verändern.

Dazu ist aus der EP 0 649 804 eine Drehtischweiche bekannt. Bei dieser Weiche ist ein Drehtisch mit drei Bahnen vorgesehen, wobei je nach Stellung des Drehtisches ein Durchlauf der Flaschen von den eingehenden in die gegenüberliegenden Förderbahnen oder ein Transferieren einer Flasche aus einer Förderbahn in die andere, schräg gegenüberliegende Förderbahn möglich ist.

Nachteilig hierbei ist, dass unabhängig vom Weg, den eine Flasche nehmen soll, die Flasche immer eine gekrümmte Kurvenbahn durchlaufen muss, wodurch eine Beunruhigung der Flaschen bewirkt wird, selbst wenn die Förderbahn nicht gewechselt wird, die maximale Fördergeschwindigkeit und der Flaschendurchsatz begrenzt sind.

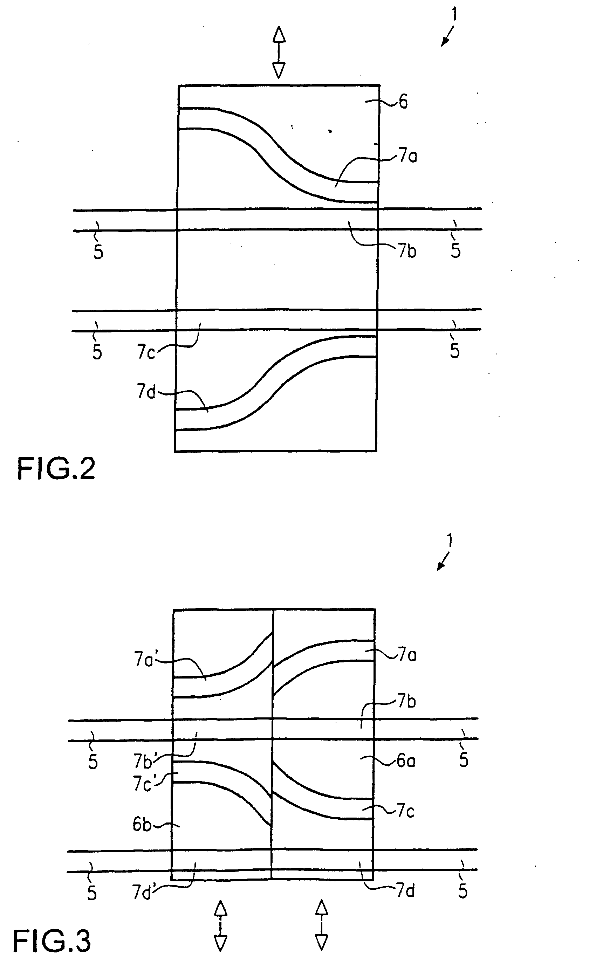

Aus der Fig. 3 des gleichen Dokuments ist eine Weichenanordnung mit zwei Binlauf- und zwei dazu fluchtenden Auslaufspuren bekannt, die einen geraden Durchlauf von Flaschen ermöglicht. Nachteiligerweise sind hierfür jedoch vier in Förderrichtung hintereinander angeordnete, quer verfahrbare Schiebeweichen erforderlich. Diese Bauart ist einerseits sehr aufwändig und beansprucht andererseits viel Platz.

Auch aus US 5 810 516 sind Schiebeweichen bekannt.
Allerdings ist damit nur eine Flaschenverteilung von einer einlaufenden Bahn auf mehrere Abförderbahnen oder umgekehrt die Zusammenführung von mehreren Binlaufbahnen in nur eine Ablaufbahn möglich.

Aufgabe der vorliegenden Erfindung ist es daher, eine Weichenvorrichtung zu schaffen, mit der Flaschen aus zwei zuführenden Förderbahnen wahlweise in abfördernde Förderbahnen überführt werden können und zwar mit möglichst hohen Transportgeschwindigkeiten und hohen Durchsatzraten.

Die Aufgabe wird durch eine Weichenvorrichtung mit den Merkmalen des Anspruchs 1 gelöst.

Dadurch, dass verschiebbare Förderbahnabschnitte vorgesehen sind, können beliebige Verbindungen zwischen den feststehenden Förderbahnabschnitten erreicht werden. So ist es möglich, geradlinige, durchgehende Verbindungen zwischen den Zuförderbahnen und den gegenüberliegenden Abförderbahnen zu schaffen, so dass keine Begrenzungen der Transportgeschwindigkeit durch kurvenförmige Bögenabschnitte gegeben sind. Damit sind für die Stellung der Weichenvorrichtung, bei der die Flaschen, ohne transferiert zu werden, gerade durchlaufen, keine Geschwindigkeits- oder Kapazitätsgrenzen durch die Weichenvorrichtung gegeben.

Für die Positionierung der verschiebbaren Förderbahnabschnitte gegenüber den feststehenden Förderbahnabschnitten muss eine ausreichend hohe Genauigkeit erreicht werden, um einen leichten Übergang der Flaschen aus einem feststehenden in einen verschiebbaren und aus einem verschiebbaren in einen feststehenden Förderbahnabschnitt zu erreichen. Bei ungenauer Positionierung entstehen Stufen oder Kanten, die einen Transport der Flaschen behindern können.

Diese genaue Positionierbarkeit wird vorteilhafterweise durch Anschläge erreicht, durch die eine exakte Positionierung des beweglichen Teils am voreingestellten Anschlag möglich ist.

Bei einer Weichenvorrichtung mit zwei Verschiebeeinrichtungen und einem drehbaren Drehförderbahnabschnitt können alle benötigten Förderbahnkonfigurationen realisiert werden, wobei jedes bewegliche Teil nur zwischen genau zwei verschiedenen Positionen, die durch ggf. einstellbare Anschläge vorgegeben werden können, hin- und herzubewegen ist. Eine derartige Vorrichtung ist daher besonders vorteilhaft, da kostengünstig und mit geringem Konstruktionsaufwand eine hohe Positioniergenauigkeit erreicht werden kann und die Weichenvorrichtung insgesamt sehr kompakt ist.

Im Folgenden werden vorteilhafte Ausgestaltungen der Erfindung anhand der Figuren erläutert. Dabei zeigt:
- Fig. 1: eine dreidimensionale, schematische Ansicht von einer vorteilhaften Ausführungsform der vorliegenden Erfindung,
- Fig. 2: eine schematische Ansicht der Ausführungsform aus Fig. 1 von unten betrachtet,
- Fig. 3: eine schematische Darstellung von unten von einer vorteilhaften Ausführungsform der vorliegenden Erfindung,
- Fig. 4a bis 4c: schematische Ansichten von unten von einer vorteilhaften Ausführungsform der vorliegenden Erfindung,
- Fig. 5: eine schematische, dreidimensionale Darstellung eines Teils einer vorteilhaften Ausführungsform der vorliegenden Erfindung.

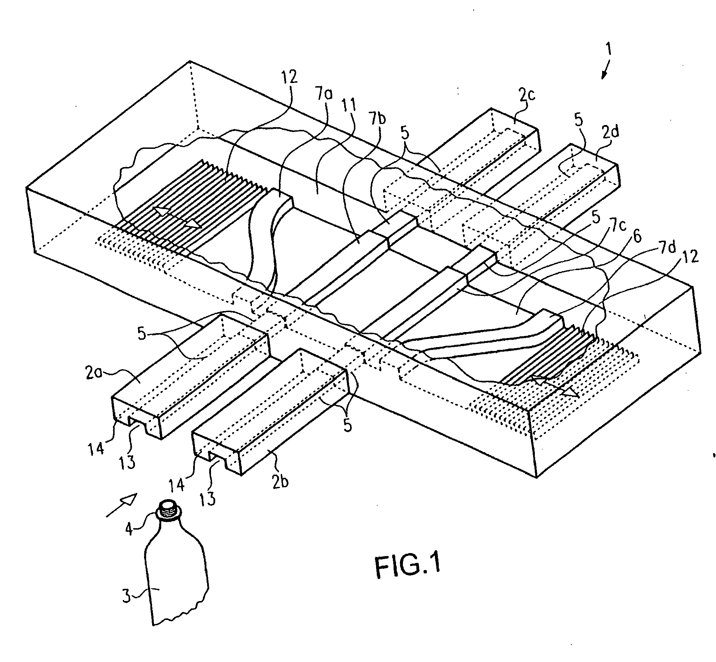

In Fig. 1 ist die Weichenvorrichtung mit der Bezugsziffer 1 bezeichnet. Zu der Weichenvorrichtung 1 führen Luftförderer 2a und 2b mit feststehenden Förderbahnabschnitten 5. Die Luftförderer haben einen kanalartig ausgebildeten Kopfbereich 13, in dem sich der einen Tragring aufweisende Kopf einer Flasche 3 bewegen kann, sowie einen Druckluftbereich 14, in den von einer nicht dargestellten Pumpe Luft gepumpt wird und von dort durch kleine Öffnungen in Förderrichtung ausströmt und so eine Flasche 3 antreibt. In der Weichenvorrichtung 1 ist eine Verschiebeeinrichtung 6 vorgesehen, die hier im Wesentlichen in Form einer Platte ausgebildet ist. Die Verschiebeeinrichtung 6 ist an der Unterseite der Weichenvorrichtung 1 vorgesehen bzw. verfahrbar gelagert. Auf der Verschiebeeinrichtung 6 sind gemeinsam mit der Verschiebeeinrichtung 6 bewegbare Förderbahnabschnitte 7a, 7b, 7c und 7d gezeigt. Die Förderbahnabschnitte 7a bis 7d sind von unten zugänglich und nach unten offen sowie als Führungskanäle mit Luftaustrittsöffnungen entsprechend den feststehenden Abschnitten 5 gestaltet. Die Abschnitte 7b und 7c sind geradlinig geformt und ermöglichen einen Transport auf einem geradlinigen Weg durch die Weichenvorrichtung 1 von der Zuförderbahn 2a zu der Abförderbahn 2c und der Zuförderbahn 2b zu der Abförderbahn 2d.

Die S-förmig ausgebildeten Förderbahnabschnitte 7a und 7d dienen dazu, den Spurwechsel einer Flasche zu ermöglichen. Soll eine Flasche 3 aus der Zuförderbahn 2a in die Abförderbahn 2d transferiert werden, so kann die Verschiebeeinrichtung 6 in Fig. 1 soweit nach links hinten verschoben werden, dass der Eingang des Förderbahnabschnitts 7d mit der Zuförderbahn 2a zur Deckung kommt und der Ausgang des verschiebbaren Förderbahnabschnitts 7d mit der Abförderbahn 2d fluchtet. Entsprechend dient der gegensinnig gekrümmte, verschiebbare Förderbahnabschnitt 7a zum Spurwechsel aus der Zuförderbahn 2b zu der Abförderbahn 2c.

An den äußeren Enden der Verschiebeeinrichtung 6, sind Faltenbälge 12 angeordnet. Die Faltenbälge 12 erlauben ein luftdichtes Verschließen der Öffnungen, die bei Verschieben der Verschiebeeinrichtung 6 zwischen dieser und einer Grundplatte 11 entstehen würden.

Um den Transport der Flaschen in den verschiebbaren Förderbahnabschnitten zu gewährleisten, können die Förderbahnabschnitte 7a bis 7d jeweils einzeln oder auch in Gruppen zusammengefasst von Druckluftbereichen umgeben sein. Diese sind in Fig. 1 der Übersichtlichkeit halber nicht dargestellt. Auch ist es möglich, den gesamten Innenraum der Weichenvorrichtung 1 mit Druckluft zu versorgen, die dann über entsprechende Schlitze oder Düsen bei oder an den verschiebbaren Förderbahnabschnitten 7a bis 7d einen Transport der Flaschen 3 bewirkt.

Bei der in Fig. 1 dargestellten Ausführungsform wird die Verschiebeeinrichtung 6 quer zur Transportrichtung, die entlang der Förderbahn 2a bis 2d liegt, verschoben. Jedoch ist auch eine Verschiebung der Verschiebeeinrichtung 6 schräg zu der Transportrichtung möglich. Auch ist eine gekrümmte Ausführungsform der Verschiebeeinrichtung 6 möglich.

Die Verschiebeeinrichtung 6 ist, wie in Fig. 1 gezeigt, im Ausschnitt einer Grundplatte 11 aufgenommen und verfahrbar geführt. Auf der Grundplatte 11 sind feststehende Förderbahnabschnitte 5 angeordnet. Es können sich innerhalb des Gehäuses auch nur die verschiebbaren Förderbahnabschnitte 7a bis 7d befinden.

Die Verschiebung der Verschiebeeinrichtung 6 kann mit pneumatischen, elektrischen, hydraulischen, mechanischen oder sonstigen Stelleinrichtungen geschehen. Vorteilhaft sind hierbei Stelleinrichtungen, mit den eine genaue Positionierbarkeit der Verschiebeeinrichtung 6 möglich ist.

In Fig. 2 ist eine schematische Darstellung der Vorrichtung aus Fig. 1 in einer Ansicht von unten gezeigt. Deutlich zu erkennen ist, wie mit den verschiebbaren Förderbahnabschnitten 7a bis 7d ein Übergang einer Flasche aus jedem Zuförderer in jeden Abförderer möglich ist.

In Fig. 3 ist eine weitere Ausführungsform der Erfindung gezeigt, bei der zwei Verschiebeeinrichtungen vorgesehen sind. Die Verschiebeeinrichtungen sind in Transportrichtung hintereinander angeordnet und enthalten jeweils Stücke 7a, 7b, 7c, 7d, 7a', 7b' 7c', 7d' der verschiebbaren Förderbahnabschnitte. In der dargestellten Anordnung können die Flaschen gerade durch die Weichenvorrichtung laufen. Durch Verschieben der Verschiebeeinrichtung 6a und 6b ist es möglich, den Förderbahnabschnitt 7a und 7a' so in Deckung zu bringen, dass ein Flaschentransport in Fig. 3 von unten links nach oben rechts oder umgekehrt möglich ist. Ebenso ist es mit den verschiebbaren Förderbahnabschnitten 7c und 7c' möglich, einen Flaschentransport von in Fig. 3 oben links nach unten rechts oder umgekehrt zu erreichen. Statt, wie in Figur 3 dargestellt, können auch mehr als zwei, z. B. drei, vier oder noch mehr Verschiebeeinrichtungen 6 vorgesehen sein. Es können auch mehr als vier Förderbahnabschnitte 5 vorhanden sein.

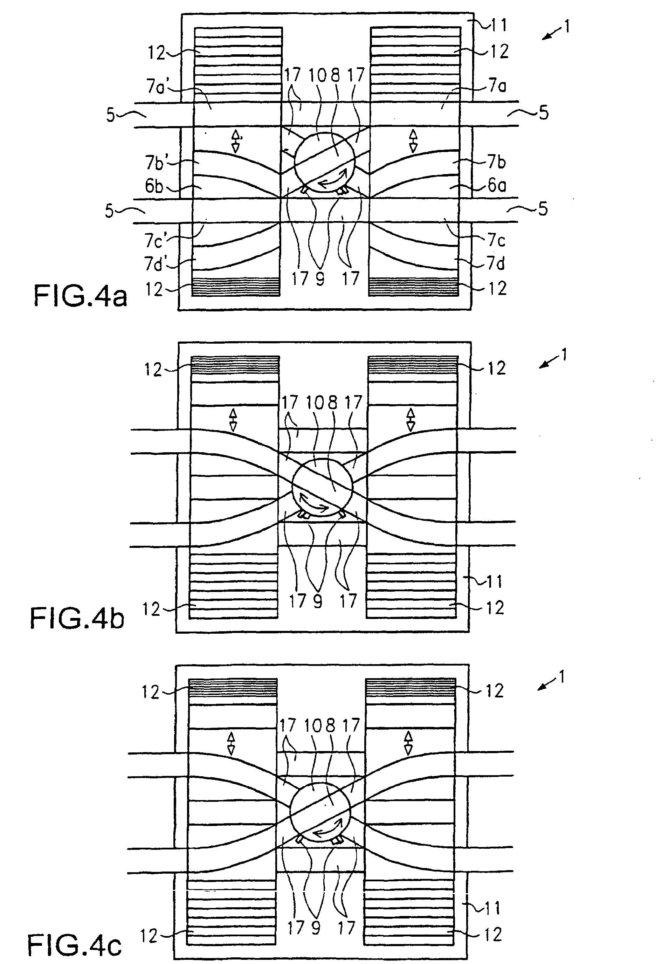

Eine besonders vorteilhafte Ausführungsform der Erfindung ist in Fig. 4a bis 4c dargestellt. Hier sind zwei Verschiebeeinrichtungenen 6a und 6b beabstandet voneinander, in Transportrichtung der Flaschen hintereinander, vorgesehen. Zwischen den Verschiebeeinrichtungen 6a und 6b ist ein verdrehbarer Drehförderbahnabschnitt 8 angeordnet. Der Drehförderbahnabschnitt 8 ist auf einer Drehscheibe 10 angeordnet. Durch Verschieben der Verschiebeeinrichtungen 6a und 6b und durch Drehen des Drehförderbahnabschnittes 8 können die benötigten Konfigurationen von Förderbahnabschnitten, wie in Fig. 4a, 4b und 4c gezeigt, erreicht werden. Durch die Anordnung von zwei Verschiebeeinrichtungen 6a und 6b mit verschiebbaren Förderbahnabschnitten 7a, 7b, 7c, 7d, 7a', 7b', 7c', 7d' und einem Drehförderbahnabschnitt 8 sowie dazwischenliegenden Verbindungsförderbahnabschnitten 17 sind zum einen die Verschiebewege der Verschiebeeinrichtungen 6a und 6b recht klein, so dass eine kompakte Weichenvorrichtung mit wenig Platzbedarf möglich ist. Zum anderen hat die in den Fig. 4 a bis 4c gezeigte Weichenvorrichtung den Vorteil, dass sowohl die Verschiebeeinrichtungen 6a und 6b, als auch der Drehförderbahnabschnitt 8 nur in genau zwei Positionen angeordnet werden müssen, die dadurch mittels Anschlägen definiert werden können. Dadurch ist auch mit kostengünstigen Stellorganen (Pneumatikzylinder oder dgl.) ein genaues Positionieren der beweglichen Teile möglich. Es ist hierfür keine aufwändige Steuerung erforderlich.

Darüberhinaus können die Verschiebeeinrichtungen 6a und 6b immer parallel, d. h. synchron miteinander verschoben werden, so dass, falls die beiden Teile verbunden sind, nur eine Stelleinrichtung für die Verschiebeeinrichtungen 6a und 6b nötig ist.

Für die Drehscheibe 10 sind in den Fig. 4a bis 4c die Anschläge 9, die die Drehung der Drehscheibe 10 und damit des Drehförderbahnabschnitts 8 begrenzen, dargestellt. Für die Verschiebeeinrichtungen 6a und 6b sind derartige Anschläge in Fig. 4a bis 4c nicht dargestellt.

In Fig. 4a bis 4c sind oberhalb und unterhalb der Verschiebeinrichtungen 6a und 6b Faltenbälge 12 vorgesehen, die als luftdichte Abdeckeinrichtungen dienen.

Dadurch, dass bei der Weichenvorrichtung 1, wie in den Fig. 4a bis 4c dargestellt, die beweglichen Teile 6a, 6b und 10 immer nur zwischen zwei Positionen hin- und herbewegt werden müssen, und diese Positionen mittels Anschläge definiert werden können, ist ein schnelles Bewegen der verschiebbaren Teile 6a, 6b und 10 in die jeweilige Anschlagposition möglich. Damit kann auf einfache Weise ein schnelles und zugleich präzises Umschalten der Weichenvorrichtung für die verschiedenen Stellungen erreicht werden.

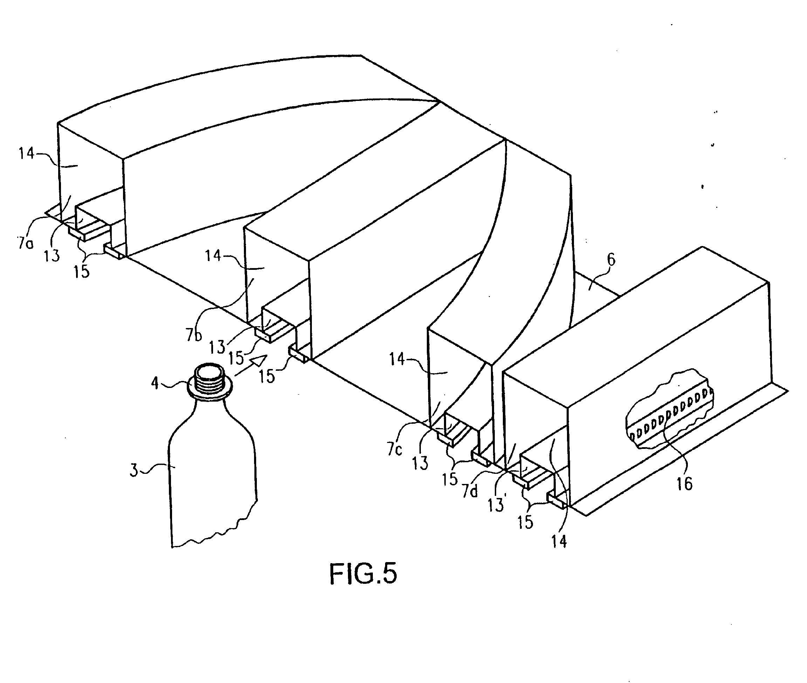

In Fig. 5 ist eine Verschiebeeinrichtung 6, wie sie in der Vorrichtung in Fig. 3 oder 4 verwendet werden kann, dargestellt. In Fig. 5 sind für den verschiebbaren Förderbahnabschnitt 7d die seitlich angeordneten Luftschlitze 16 dargestellt, mit denen Luft seitlich in Förderrichtung auf den Kopf einer Flasche 3 geblasen werden kann, um diese anzutreiben. Die Luft, die durch die Schlitze 16 strömt, wird von dem Druckluftbereich 14 zur Verfügung gestellt. Der Druckluftbereich 14 umgibt dabei einen Teil oder insgesamt den verschiebbaren Förderbahnabschnitt 7d.

Am jeweils unteren Ende der verschiebbaren Förderbahnabschnitte 7a bis 7d sind Tragleisten 15 gezeigt, auf denen der Kragen 4 der Flaschen 3 während des Transports aufliegt.

Während in Fig. 5 vier einzelne Druckluftbereiche 14 dargestellt sind, können die Druckluftbereiche auch für die verschiedenen verschiebbaren Förderbahnabschnitte zusammengefasst sein, so dass ein Druckluftbereich die Druckluft für mehrere Förderbahnabschnitte zur Verfügung stellt. Auch können die Druckluftbereiche wesentlich größer oder wesentlich kleiner sein, als in Fig. 5 dargestellt.

Während die Verbindung der verschiebbaren Förderbahnabschnitte 7 in Fig. 5 durch eine Platte gewährleistet wird, kann die Verbindung auch anderweitig durch z. B. Streben o. ä. vorgenommen werden.

Eine oder mehrere Verschiebeeinrichtungen 6 können auch in der Verschieberichtung (z.B. quer zur Transportrichtung der Flaschen) in zwei oder mehr Verschiebeeinrichtungen 6 mit jeweils einem oder mehreren verschiebbaren Förderbahnabschnitten geteilt sein. Die einzelnen Verschiebeeinrichtungen 6 können unabhängig voneinander verschiebbar sein. Weiterhin kann die Verschiebeeinrichtung 6 im Wesentlichen aus einem Förderbahnabschnitt bestehen.

Bei der Weichenvorrichtung 1 können weiterhin hängend angebrachte Geländer oder Leitstangen vorgesehen sein, die in Höhe des Flaschenkörpers der Flasche 3 angebracht sind, um diese seitlich zu führen. Die Geländer können für die feststehenden und die verschiebbaren Förderbahnabschnitte 7a bis 7d, als auch für den Drehförderbahnabschnitt 8 vorgesehen sein. Die Geländer können feststehend oder beweglich sein.

Vorteilhafterweise ist das Gehäuse der Weichenvorrichtung 1 weitgehend geschlossen. Dadurch wird ein Staubeintrag in die Weichenvorrichtung 1 und ein Druckverlust vermieden. Das Schließen kann durch Vorsehen einer oder mehrerer Platten bei der Verschiebeeinrichtung 6 und/oder durch eine Drehscheibe 10 bei dem Drehförderbahnabschnitt 8 und/oder durch die Faltenbälge 12 geschehen.

## Patentansprüche

1. Weichenvorrichtung (1) für Luftförderer (2), mit denen insbesondere Kunstoffflaschen (3) an ihrem Kragen (4) hängend transportiert werden können, wobei der Luftförderer feststehende Förderbahnabschnitte (5) mit zwei Zuförderbahnen (2a, 2b) und zwei Abförderbahnen (2c, 2d) und mindestens eine relativ zu den feststehenden Förderbahnabschnitten (5) verschiebbare Verschiebeeinrichtung (6) mit Förderbahnabschnitten (7a, 7b, 7c, 7d) aufweist, **dadurch gekennzeichnet, dass** in der wenigstens einen Verschiebeeinrichtung (6) für den Durchlauf von Flaschen aus den Zuförderbahnen (2a, 2b) in die gegenüberliegenden Abförderbahnen (2c, 2d) zwei von den Zuförderbahnen (2a, 2b) bis zu der jeweils fluchtenden Abförderbahn (2c, 2d) durchgehend geradlinige Förderbahnen (7b, 7c)vorgesehen sind.

2. weichenvorrichtung (1) nach Anspruch 1 , **dadurch gekennzeichnet, dass** ein, vorzugsweise genau ein, verdrehbarer Drehförderbahnabschnitt (8) vorgesehen ist.

3. Weichenvorrichtung (1) nach Anspruch 2, **dadurch gekennzeichnet, dass** der Drehförderbahnabschnitt (8) zwischen zwei Verschiebeeinrichtungen (6a, 6b) angeordnet ist.

4. Weichenvorrichtung (1) nach einem der Ansprüche 2 oder 3, **dadurch gekennzeichnet, dass** der Drehförderbahnabschnitt (8) mit einer Drehscheibe (10) verbunden vorgesehen ist.

5. Weichenvorrichtung (1) nach einem der Ansprüche 2 bis 4, **dadurch gekennzeichnet, dass** zwei Anschläge (9) vorgesehen sind, mit denen die Drehung des Drehförderbahnabschnitts (8) begrenzt wird.

6. Weichenvorrichtung (1) nach einem der Ansprüche 1 bis 5, **dadurch gekennzeichnet, dass** eine Grundplatte (11) vorgesehen ist, in der die Verschiebeeinrichtung (6) und/oder der Drehförderbahnabschnitt (8) und/oder die Drehscheibe (10) aufgenommen ist.

7. Weichenvorrichtung (1) nach einem der Ansprüche 1 bis 6, **dadurch gekennzeichnet, dass** mindestens eine, vorzugsweise alle Verschiebeeinrichtungen (6) Anschläge aufweisen.

8. Weichenvorrichtung (1) nach einem der Ansprüche 1 bis 7, **dadurch gekennzeichnet, dass** an den Enden, die in der verschieberichtung der Verschiebeeinrichtung (6) liegen, Abdeckeinrichtungen (12), insbesondere Faltenbälge (12), vorgesehen sind.

9. Weichenvorrichtung (1) nach einem der Ansprüche 1 bis 8, **dadurch gekennzeichnet, dass** zum Verstellen des Drehförderbahnabschnitts (8) und/oder der Verschiebeeinrichtung (6) pneumatische, elektrische, hydraulische, mechanische oder sonstige Stelleinrichtungen vorgesehen sind.

10. Weichenvorrichtung (1) nach einem der Ansprüche 1 bis 9, **dadurch gekennzeichnet, dass** Geländer zur seitlichen Führung der Flaschen (3), Vorformlinge oder dergleichen vorgesehen sind.

## Claims

1. Switch (1) for air conveyor (2), with which plastic bottles (3) in particular may be transported hanging from their necks (4), in which the air conveyor has fixed conveyor path sections (5) with two supply paths (2a, 2b) and two delivery paths (2c, 2d) and at least one relocation device (6), which can be shifted in relation to the fixed conveyor path sections (5) and which has conveyor path sections (7a, 7b, 7c, 7d), **characterised in that** in at least the one relocation device (6) for the flow of bottles from the supply paths (2a, 2b) into the opposite delivery paths (2c, 2d) two straight paths (7b, 7c) are provided going from the supply paths (2a, 2b) to the relevant delivery paths (2c, 2d) lined up with them.

2. Switch (1) according to claim 1, **characterised in that** a, preferably just one, turning conveyor path section (8) is provided, which can be turned.

3. Switch (1) according to claim 2, **characterised in that** the turning conveyor path section (8) is arranged between two relocation devices (6a, 6b).

4. Switch (1) according to one of claims 2 or 3, **characterised in that** the turning conveyor path section (8) is provided with a turntable (10).

5. Switch (1) according to one of claims 2 to 4, **characterised in that** two stops (9) are provided, with which the turning of the turning conveyor path section (8) is limited.

6. Switch (1) according to one of claims 1 to 5, **characterised in that** a base plate (11) is provided, in which the relocation device (6) and/or the turning conveyor path section (8) and/or the turntable (10) is housed.

7. Switch (1) according to one of claims 1 to 6, **characterised in that** at least one, preferably all the relocation devices (6) have stops.

8. Switch (i) according to one of claims 1 to 7, **characterised in that** covering devices (12), particularly bellows (12), are provided on the ends, which are in the relocation direction of the relocation device (6).

9. Switch (1) according to one of claims 1 to 8, **characterised in that** pneumatic, electric, hydraulic, mechanical or other adjustment devices are provided to adjust the turning conveyor path section (8) and/or the relocation device (6).

10. Switch (1) according to one of claims 1 to 9, **characterised in that** rails for guiding the side of the bottles (3), preforms or similar are provided.

## Revendications

1. Dispositif d'aiguillage (1) pour convoyeur à air (2) permettant de transporter notamment des bouteilles plastiques (3) suspendues au niveau de leur col (4), dans lequel le convoyeur à air présente des segments de bande de convoyage fixes (5) avec deux bandes d'alimentation (2a, 2b) et deux bandes d'évacuation (2c, 2d), et au moins un dispositif de déplacement (6) déplaçable par rapport aux segments de bande de convoyage fixes (5) et muni de segments de bande de convoyage (7a, 7b, 7c, 7d),
**caractérisé en ce que**
dans l'au moins un dispositif de déplacement (6) deux bandes de convoyage (7b, 7c) entièrement droites depuis les bandes d'alimentation (2a, 2b) jusqu'à la bande d'évacuation (2c, 2d) alignée sont prévues pour le passage de bouteilles depuis les bandes d'alimentation (2a, 2b) jusqu'aux bandes d'évacuation (2c, 2d) situées en face.

2. Dispositif d'aiguillage (1) selon la revendication 1,
**caractérisé en ce qu'**
un, de préférence précisément un, segment de bande de convoyage rotatif (8) est prévu.

3. Dispositif d'aiguillage (1) selon la revendication 2,
**caractérisé en ce que**
le segment de bande de convoyage rotatif (8) est disposé entre deux dispositifs de déplacement (6a, 6b).

4. Dispositif d'aiguillage (1) selon l'une quelconque des revendications 2 ou 3,
**caractérisé en ce que**
le segment de bande de convoyage rotatif (8) est prévu relié à un disque rotatif (10).

5. Dispositif d'aiguillage (1) selon l'une quelconque des revendications 2 à 4,
**caractérisé en ce que**
deux butées (9) sont prévues pour limiter la rotation du segment de bande de convoyage rotatif (8).

6. Dispositif d'aiguillage (1) selon l'une quelconque des revendications 1 à 5,
**caractérisé en ce qu'**
une plaque de base (11) est prévue pour recevoir le dispositif de déplacement (6) et/ou le segment de bande de convoyage rotatif (8) et/ou le disque rotatif (10).

7. Dispositif d'aiguillage (1) selon l'une quelconque des revendications 1 à 6,
**caractérisé en ce qu'**
au moins un, de préférence tous les dispositifs de déplacement (6) présentent des butées.

8. Dispositif d'aiguillage (1) selon l'une quelconque des revendications 1 à 7,
**caractérisé en ce que**
des dispositifs de couverture (12), notamment des soufflets (12), sont prévus aux extrémités situées dans la direction de déplacement du dispositif de déplacement (6).

9. Dispositif d'aiguillage (1) selon l'une quelconque des revendications 1 à 8,
**caractérisé en ce que**
des dispositifs de réglage pneumatiques, électriques, hydrauliques, mécaniques ou autres sont prévus pour le réglage du segment de bande de convoyage rotatif (8) et/ou du dispositif de déplacement (6).

10. Dispositif d'aiguillage (1) selon l'une quelconque des revendications 1 à 9,
**caractérisé en ce que**
des balustrades sont prévues pour le guidage latéral des bouteilles (3), préformes et similaires.
